Europäisches Patentamt

European Patent Office

Office européen des brevets

(19)

(11) **EP 0 401 927 B1**

## (12) FASCICULE DE BREVET EUROPEEN

(45) Date de publication et mention
de la délivrance du brevet:
**02.01.1997 Bulletin 1997/01**

(51) Int Cl.6: **G06F 15/80**

(21) Numéro de dépôt: **90201421.6**

(22) Date de dépôt: **05.06.1990**

(54) **Méthode d'apprentissage, réseau de neurones et ordinateur pour simuler ledit réseau de neurones**

Lernverfahren, neuronales Netz und Rechner zur Simulation eines solchen neuronalen Netzes

Learning method, neural network and computer for simulating said neural network

(84) Etats contractants désignés:
**DE FR GB IT**

(30) Priorité: **09.06.1989 FR 8907662**

(43) Date de publication de la demande:
**12.12.1990 Bulletin 1990/50**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB IT**

(72) Inventeur: **Makram-Ebeid, Sherif**
**Société Civile S.P.I.D.**
**F-75007 Paris (FR)**

(74) Mandataire: **Landousy, Christian et al**
**Société Civile S.P.I.D.**
**156, Boulevard Haussmann**
**75008 Paris (FR)**

(56) Documents cités:
**WO-A-88/07234**

- **RUMELHART: "Parallel Distributed Processing, Explorations in the Microstructure of Cognition", vol. 1: "Foundations", 1986, pages 318-362, MIT Press**
- **FGCS - FUTURE GENERATIONS COMPUTER SYSTEMS, vol. 4, no. 1, Août 1988, pages 39-51; MATSUMOTO: "Neurocomputing-neurons as microcomputers"**
- **JOURNAL OF PARALLEL AND DISTRIBUTED COMPUTING, vol. 6, no. 2, avril 1989, pages 185-216; ARBIB: "Shemas and neural networks for sixth generation computing"**

**Description**

L'invention concerne une méthode d'apprentissage mise en oeuvre dans un réseau de neurones qui effectue des phases d'apprentissage pour adapter ses coefficients synaptiques à partir d'exemples à l'aide de l'algorithme de rétropropagation du gradient de l'erreur. Elle concerne également un réseau de neurones et un calculateur programmé pour simuler un tel réseau.

Les réseaux de neurones trouvent leurs applications dans le traitement d'image, de la parole...

Les réseaux de neurones sont constitués d'automates connectés entre eux par des synapses auxquelles sont affectés des coefficients synaptiques. Ils permettent de traiter des problèmes qui le sont difficilement par les ordinateurs séquentiels classiques.

Pour effectuer un traitement donné, les réseaux de neurones doivent au préalable apprendre à l'effectuer. Cette phase appelée apprentissage fait appel à des exemples pour lesquels, à partir de données d'entrée, les résultats que l'on doit obtenir en sortie sont connus à l'avance. Dans un premier temps le réseau de neurones qui n'est pas encore adapté à la tâche prévue, va délivrer des résultats erronés. On détermine alors une erreur $E^p$ entre les résultats obtenus et ceux que l'on aurait dû obtenir et, à partir d'un critère d'adaptation, on modifie les coefficients synaptiques pour permettre au réseau de neurones d'apprendre l'exemple choisi. Cette étape est réitérée sur le lot d'exemples considérés comme nécessaires à un apprentissage satisfaisant du réseau de neurones.

Une méthode très répandue pour opérer cette adaptation est celle de la rétropropagation du gradient. Pour cela on détermine les composantes du gradient $g_{j,L}$ de l'erreur $E^p$ précédente (calculée sur la dernière couche L) par rapport à chaque état de neurone $x_{j,L}$.
Ces composantes sont ensuite rétropropagées dans le réseau de neurones à partir de ses sorties afin de déterminer d'abord les composantes internes $g_{j,l}$ ($l \neq L$) puis les corrections à apporter aux coefficients synaptiques $W_{ij,l}$ des neurones concernés. Cette méthode est par exemple décrite dans les documents :

- D.E. Rumelhart, D.E. Hinton, and R.J. Williams, "Learning Internal Representation by Error Propagation", in D.E. Rumelhart, and J.L. McClelland (Eds), "Parallel Distributed Processing : Exploration in the Microstructure of Cognition", Vol. 1, Foundations, MIT Press (1986).
- "Experiments on neural net recognition of spoken and written text." D.J. Burr, IEEE Trans. on Acoustic, speech and signal processing Vol.36, n°7, July 1988 p.1162.

Mais lorsqu'une telle méthode est mise en oeuvre dans un réseau de neurones, il peut arriver que pour certaines applications les temps d'apprentissage deviennent très longs. Ainsi par exemple dans le cas d'un problème de parité cette difficulté a été observée. Le problème de parité se présente par exemple dans le cas d'un réseau de neurones dont les entrées sont réunies à des signaux binaires 1/0 et dont la sortie doit délivrer un état 1 lorsque le nombre d'entrées à 1 est impair et un état 0 dans le cas inverse. La difficulté de l'apprentissage est due ici au fait que l'état de sortie doit changer lorsqu'une seule des entrées change d'état alors que lorsque c'est un nombre pair de changements d'état des entrées qui se produit, la sortie doit rester inchangée.

De même, par exemple, lorsque le réseau de neurones est utilisé dans des problèmes de classification il peut être très difficile d'opérer la séparation des classes entre lesquelles la distance euclidienne minimale est petite car le réseau de neurones a besoin d'un temps très long pour apprendre à différencier ces différentes classes. Ceci gêne la séparation des données d'entrées codées en continu et en particulier lorsque certains des exemples, qui appartiennent à des classes différentes, ont des entrées qui diffèrent très peu les unes des autres.

Le problème posé est donc de réduire les temps d'apprentissage du réseau de neurones tout en réduisant au maximum le matériel supplémentaire nécessaire.

La solution consiste en une méthode d'apprentissage mise en oeuvre dans un réseau de neurones, formé de L couches, qui comprend les étapes de :

.  détermination des états $x_{j,l}$ des neurones d'une couche 1 à partir des potentiels de sortie $y_{i,l-1}$ délivrés par les neurones de la couche précédente qui leur sont connectés par des coefficients synaptiques $W_{ij,l}$ ou à partir de données d'entrée $y_{i,o}$ pour la couche l=1, tel que :

$$x_{j,1} = \sum_{i} W_{ij,1} \cdot y_{i,1-1}$$

.  détermination des potentiels $y_{j,l}$ des neurones de sortie par application d'une fonction non-linéaire F tel que :

$$y_{j,l} = F(x_{j,l})$$

avec :

l : indice de la couche considérée $1 \leq l \leq L$
j : indice du neurone de la couche de sortie l
i : indice du neurone de la couche d'entrée l-1

la méthode comprenant des phases d'apprentissage par itération à l'aide de P exemples qui sont introduits successivement sur les entrées du réseau de neurones avec :

- initialisation de la matrice de coefficients synaptiques $W_{ij,l}$ du réseau de neurones,
- introduction des données d'entrée $y_{j,o}^p$ de chaque exemple p destiné à l'apprentissage,
- comparaison des résultats obtenus $y_{j,L}$ sur la couche de sortie L avec la sortie $y_j^P$ prévue pour cet exemple p présenté en entrée, pour définir une erreur partielle $E_j^p$ ,
- détermination de la somme $E^p$ de toutes les erreurs partielles $E_j^p$ observées pour chaque neurone de sortie et pour chaque exemple p,
- détermination des différentes composantes du gradient $g_{j,L} = \partial E^p / \partial x_{j,L}$ de l'erreur $E^p$ par rapport aux états $x_{j,L}$ pour la couche de sortie L,
- mise en oeuvre de la méthode de rétropropagation des composantes $g_{j,L}$ du gradient pour que le réseau de neurones détermine les composantes $g_{j,l}$ du gradient pour les autres couches à partir de la matrice de coefficients synaptiques transposée,
- détermination des variations $\Delta x_{j,l}$ subséquentes qui ont un signe opposé à la composante correspondante $g_{j,l}$, afin d'adapter le réseau de neurones
- mise à jour des coefficients synaptiques à partir de ces variations $\Delta x_{j,l}$, caractérisée en ce que pour déterminer les variations $\Delta x_{j,l}$ subséquentes des états de neurones, la méthode comprend une étape de multiplication des composantes $g_{j,l}$ du gradient par des paramètres $\theta_{j,l}$ pour calculer des variations $\Delta x_{j,l}$ proportionnelles à $-\theta_{j,l} \cdot g_{j,l}$, où $\theta_{j,l}$ dépend de l'état du neurone j de la couche l, avec $\theta_{j,i}=1$ lorsque $-g_{j,l}$ et $x_{j,l}$ sont de signes différents, et $\theta_{j,l}=\theta_l^+$ lorsque $-g_{j,l}$ et $x_{j,l}$ sont de même signe, avec $0 \leq \theta_l^+ \leq 1$.

Au cours de l'apprentissage on présente un exemple p donné. Les données propres à l'exemple p introduites sur les entrées du réseau de neurones vont délivrer sur la dernière couche L du réseau, un résultat $y_{j,L}$ pour un neurone de sortie j donné. Or on connaît au départ le résultat $y_j^p$ que l'on aurait dû obtenir. On peut ainsi calculer pour un exemple une erreur tel que :

$$E^p = \tfrac{1}{2} \sum_{j=1}^{I(L)} (y_j^p - y_{j,L})^2$$

C'est l'expression du calcul d'une erreur quadratique moyenne. Un autre critère de comparaison peut être utilisé. Selon la méthode connue de rétropropagation du gradient, on détermine les composantes $g_{j,l}$ du gradient de l'erreur pour chaque contribution d'un état $x_{j,l}$ d'un neurone tel que :

$$g_{j,l} = \partial E^p / \partial x_{j,l}$$

où $x_{j,l}$ représente l'état du neurone avant l'action de la fonction non linéaire. Pour cela on calcule les composantes $g_{j,L} = \partial E^p / \partial x_{j,L}$ se rapportant à la couche de sortie L tel que $g_{j,L} = (y_{j,L} - y_j^p) \cdot F_{j,L}'$ où $F_{j,L}'$ est la dérivée des fonctions non linéaires de sortie.

Le réseau de neurones est alors chargé avec la matrice de coefficients synaptiques transposée $W_{ji,l}$ et les composantes $g_{j,L}$ sont rétropropagées dans le réseau à partir de sa sortie. Le réseau détermine ainsi les autres composantes $g_{j,l}$ du gradient avec $1 \neq L$. Ces composantes $g_{j,l}$ sont utilisées pour déterminer les variations $\Delta x_{j,l}$ qui servent à corriger les coefficients synaptiques $W_{ij,l}$ pour que le réseau s'adapte à l'exemple concerné.

Généralement cette correction selon la méthode connue est effectuée tel que

$$W_{ij,l}(\text{nouveau}) = W_{ij,l}(\text{ancien}) + k. \Delta x_{j,l} \cdot y_{i,l-1} .$$

Selon l'invention les composantes $g_{j,l}$ ne sont pas utilisées tel quel mais sont préalablement multipliées chacune par un paramètre propre $\theta_{j,l}$ qui dépend pour un neurone j donné du signe :

- de l'état $x_{j,l}$ de ce neurone
- et du signe de la composante du gradient $g_{j,l}$.

Ces paramètres sont $\theta_{j,l} = 1$ lorsque $-g_{j,l}$ et $x_{j,l}$ sont de signes différents,
et $\theta_{j,l} = \theta_l^+$ lorsque $-g_{j,l}$ et $x_{j,l}$ sont de même signe avec $0 \leq \theta_l^+ \leq 1$.
Mais pour accélérer l'apprentissage, préférentiellement au cours des premières itérations de l'apprentissage, pour chaque exemple donné, $\theta_l^+$ est choisi soit voisin de zéro soit égal à zéro.

Il est possible complémentairement au cours des itérations ultérieures de l'apprentissage, pour chaque exemple donné, de faire croître $\theta_l^+$ vers la valeur 1.

Avantageusement, la stratégie du signe selon l'invention permet au début de l'apprentissage de faire que les corrections opérées tiennent compte du signe de l'erreur observée, puis au fur et à mesure que l'apprentissage progresse, cette stratégie permet de provoquer graduellement des corrections moins brutales ayant une plus grande précision.

Les fonctions non linéaires qui opèrent pour déterminer les potentiels de sortie peuvent être choisies faiblement ou fortement non linéaires. Pour accroître l'efficacité de la stratégie du signe selon l'invention il est possible de modifier en cours de l'apprentissage le choix de ces fonctions non linéaires. Mais les variations $\Delta x_{j,l}$ qui se déduisent de la méthode de la rétropropagation du gradient ne doivent pas conduire à des variations trop importantes des coefficients synaptiques. Aussi selon un mode complémentaire de l'invention on effectue une normalisation tel que la somme des carrés des coefficients synaptiques reste quasiment constante.

Ainsi les fonctions non linéaires sont choisies faiblement non linéaires en début d'apprentissage puis s'approchent de fonctions de type signe en fin d'apprentissage, et pour permettre ce choix, les coefficients synaptiques qui convergent vers un neurone donné j gardent une norme

$$\sum_l (W_{ij,l})^2$$

quasiment constante.

Ces fonctions non linéaires F sont par exemple du type $y_{j,l} = \tanh(x_{j,l}/T_l)$ où $T_l$ est un paramètre relatif à la couche l appelé température de la couche l.

Les variations apportées au cours de l'apprentissage au degré de non linéarité des fonctions non linéaires sont obtenues en faisant varier, pour chaque couche, les paramètres $T_l$.

La stratégie du signe selon l'invention, qui consiste d'abord à privilégier des corrections brutales ($\theta^+$ petit et positif) basées sur le signe de l'erreur puis à l'adoucir par les paramètres $\theta^+$ voisins de l'unité afin d'opérer des corrections ayant une plus grande précision, peut donner lieu à une action similaire au niveau de la structure globale. Pour cela pour chaque exemple chaque composante $E_j^p$ de l'erreur $E^p$ est elle-même multipliée par un paramètre $\eta_{j,L}$. Ainsi des corrections (paramètre $\eta_{j,L}$) qui concernent simultanément la totalité des états neuronaux peuvent être superposées à chacune des corrections individuelles effectuées pour chaque état (paramètre $\theta^+$).

Pour favoriser la stratégie du signe présentée précédemment, on introduit un facteur de correction $\eta_{j,L}$ qui dépend de chaque neurone de sortie j de la dernière couche L. L'erreur $E^p$ est alors déterminée telle que :

$$E^p = \sum \eta_{j,L} \cdot E_j^p$$

avec $E_j^p = \frac{1}{2}(y_j^p - y_{j,L})^2$
Cette erreur est une fonction quadratique.

Dans le cas général, pour chaque neurone de sortie j de la couche L (pour un exemple p donné) cette erreur $E_j^p$ est :

$$E_j^p = H(y_j^p - y_{j,L})$$

où H est une fonction de l'écart entre le résultat obtenu $y_{j,L}$ et le résultat prévisible $y_j^P$.

Cette erreur $E^p$ ainsi déterminée est utilisée pour déterminer les composantes $g_{j,L}$ et $g_{j,l}$ (avec $l \neq L$) du gradient

comme cela a été développé précédemment.

Ainsi pour déterminer ces composantes du gradient la méthode comprend une étape de détermination de l'erreur $E^p$ en appliquant préalablement un facteur de correction $\eta_{j,L}$ qui dépend du neurone j de la dernière couche L tel que

$$E^p = \sum_{j=1}^{I(L)} \eta_{j,L} \cdot E_j^p$$

afin de favoriser le début de l'apprentissage,

avec $\eta_{j,L}=1$ si $y_j^p$ et $y_{j,L}$ sont de signes différents et $\eta_{j,L}=\eta^+$ si $y_j^p$ et $y_{j,L}$ sont de même signe avec $0\leq\eta^+\leq1$.

Dans le cas courant $\eta_{j,L} = \theta_{j,L}$.

Préférentiellement chaque erreur partielle $E_j^p$ est l'erreur quadratique $\frac{1}{2}$ $(y_j^p - y_{j,L})^2$.

Selon un mode subsidiaire la stratégie peut être développée au niveau de chaque couche du réseau de neurones. Compte-tenu du rôle prépondérant dévolu aux couches d'entrée, il y a lieu d'accélérer l'apprentissage des couches d'entrée et de ralentir l'apprentissage des couches de sortie.

Dans l'application classique de la méthode de rétropropagation du gradient l'état d'un neurone $x_{j,l}$ est modifié d'une quantité $-\Delta x_{j,l}$ qui tient compte de la composante du gradient $g_{j,l}$ correspondante. Ceci s'effectue en multipliant chaque composante du gradient $g_{j,l}$ par une constante de proportionnalité qui est la même pour toutes les couches du réseau de neurones.

Selon le mode subsidiaire, l'invention propose d'opérer la correction en affectant à chaque neurone de chaque couche un coefficient de proportionnalité $\beta_{j,l}$ de sorte que chaque correction $-\Delta x_{j,l}$ soit proportionnelle à $\beta_{j,l} \cdot g_{j,l}$.

Le paramètre $\beta_{j,l}$ est relié à la stratégie du signe précédemment décrite en le prenant proportionnel au paramètre $\theta_{j,l}$ servant à déterminer les corrections $\Delta x_{j,l}$.

Ainsi $\beta_{j,l}$ est proportionnel à $\beta_l \cdot \theta_{j,l}$ où $\beta_l$ est un paramètre identique pour toute une couche l donnée. Selon ce mode subsidiaire, on affecte à chaque couche 1 un paramètre $\beta_l$ qui lui est propre et qui permet de contrôler la vitesse d'apprentissage sur les couches d'entrée par rapport à celle sur les couches de sortie. Pour cela le paramètre $\beta_l$ décroît quand l croît de la couche d'entrée vers la couche de sortie.

Ainsi l'invention comprend une étape de multiplication des composantes $\theta_{j,l} \cdot g_{j,l}$ par des constantes $\beta_l$ qui dépendent de chaque couche, pour que $-\Delta x_{j,l}$ soit alors proportionnel à $\beta_l \cdot \theta_{j,l} \cdot g_{j,l}$, avec $\beta_l$ strictement décroissante selon le numéro de la couche, en allant des couches d'entrée vers les couches de sortie, afin que les corrections appliquées aux états de neurones permettent d'accélérer l'apprentissage sur les couches d'entrée et de ralentir l'apprentissage sur les couches de sortie.

L'invention sera mieux comprise à l'aide des figures suivantes données à titre d'exemple non limitatif qui représentent :

Figure 1 : un schéma indiquant les mécanismes du traitement opéré par une structure ayant une couche de neurones d'entrée et un neurone de sortie.

Figure 2 : un schéma représentant une structure à plusieurs couches : couche d'entrée, couches cachées, couche de sortie.

Figure 3 : un schéma représentant une structure de réseau de neurones mettant en oeuvre la méthode selon l'invention.

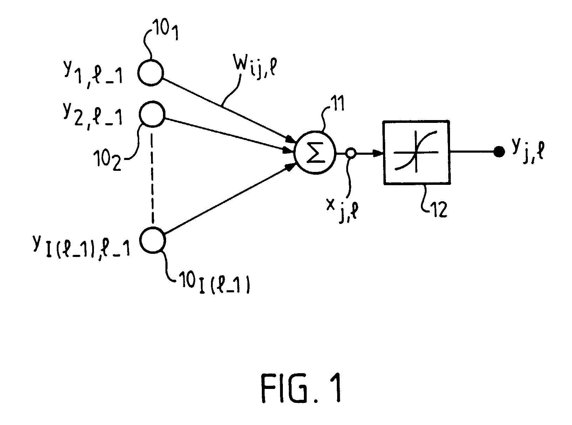

La figure 1 représente le schéma classique d'un traitement opéré sur un réseau de neurones élémentaire formé d'une couche d'entrée à plusieurs neurones $10_1 \ldots 10_{I(l-1)}$ qui délivrent respectivement les signaux d'entrée $y_{1,l-1}, y_{2,l-1}, \ldots y_{I(l-1),l-1}$ à un seul neurone de sortie dont l'état est $x_{j,l}$. Cet état est déterminé par des moyens de calcul 11 tel que :

$$x_{j,1} = \sum_{i} W_{ij,1} \cdot Y_{i,1-1}$$

Cet état $x_{j,l}$ est soumis à l'action d'une fonction non linéaire (bloc 12) pour délivrer le potentiel de sortie $y_{j,l}$ après application de cette fonction F.

$$y_{j,l} = F(x_{j,l})$$

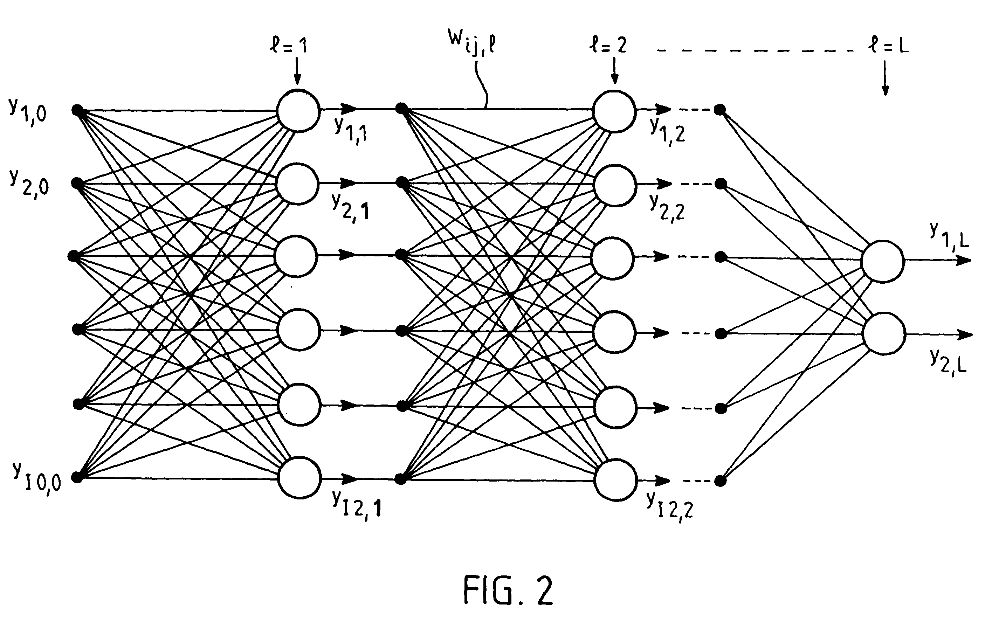

Ce potentiel de sortie $y_{j,l}$ peut alors servir d'état d'entrée pour une couche suivante. On réalise ainsi un empilement en couches représenté sur la figure 2 avec une couche d'entrée l=1, des couches cachées 1=2, 3, et une couche de sortie l=L. Les neurones d'une couche sont uniquement reliés à ceux de la couche suivante selon des coefficients synaptiques $W_{ij,l}$. Chaque état de neurones est déterminé selon les expressions précédentes en commençant à la couche l=1.

Pour effectuer l'apprentissage, c'est-à-dire adapter les coefficients synaptiques $W_{ij,l}$ à une tâche donnée, on présente en entrée des exemples pour lesquels les résultats $y_j^p$ sur la couche de sortie sont connus à l'avance. L'erreur $E^p$ est calculée pour chaque exemple sur tous les états de sortie, puis on détermine ses variations relatives par rapport à des faibles variations $\partial x_{j,l}$ de chaque état intermédiaire. Les composantes $g_{j,l}$ du gradient sont telles que :

$$g_{j,l} = \partial E^p / \partial x_{j,l}$$

Pour cela les composantes $g_{j,L}$ sur la couche de sortie sont calculées puis sont rétropropagées dans le réseau de neurones qui restitue les autres composantes $g_{j,l}$ du gradient d'erreur. Ces composantes permettent de déterminer les variations $\Delta x_{j,l}$ qui s'en déduisent pour les états $x_{j,l}$ pour que le réseau de neurones s'adapte à la tâche prévue. Ceci précède la mise à jour des coefficients synaptiques $W_{ij,l}$ comme cela a été indiqué précédemment.

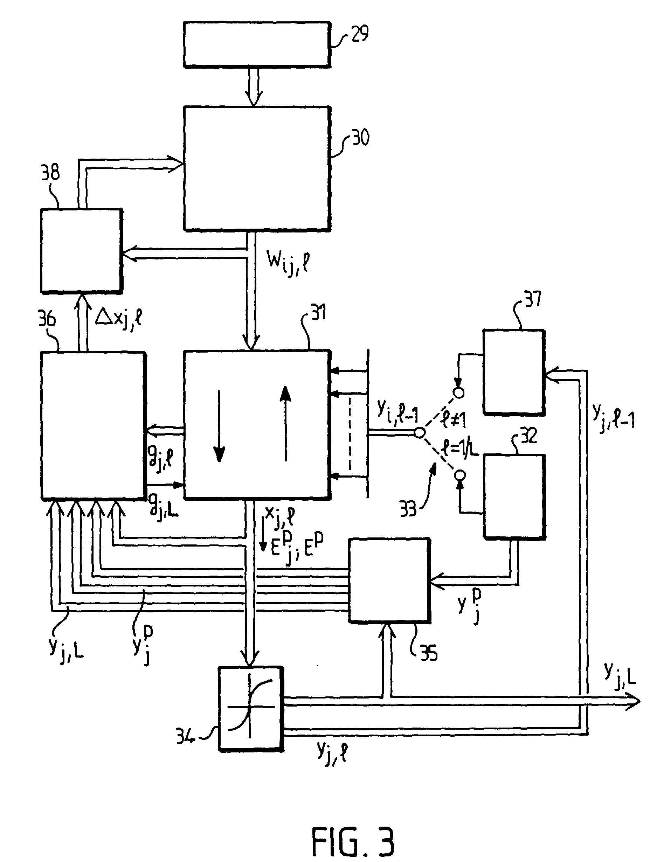

Ces étapes de la méthode sont réalisées dans une structure de réseau de neurones dédiée tel que cela est représenté sur la figure 3 ou dans un calculateur programmé pour la mise en oeuvre de la méthode.

La mémoire 30 stocke la matrice de coefficients synaptiques $W_{ij,l}$, et la matrice transposée $W_{ji,l}$ issues initialement des moyens d'entrée 29. Les coefficients synaptiques sont transmis à des moyens de calcul 31 qui reçoivent les potentiels d'entrée $y_{i,l-1}$ issus de la couche précédente. Ces moyens 31 déterminent :

$$x_{j,l} = \Sigma\ W_{ij,l} \cdot y_{i,l-1}$$

Au départ les états de neurones d'entrée $y_{i,l-1}$ sont des exemples $y_{i,0}$ appliqués en entrée du réseau. Ces exemples sont issus d'une mémoire d'exemples 32. Un sélecteur 33 permet d'effectuer cette sélection. La mémoire d'exemples 32 stocke également les résultats $y_j^p$ que l'on doit obtenir pour chaque exemple p et pour chaque potentiel de sortie j.

Les états $x_{j,l}$ des neurones de sortie sont soumis à l'action d'une fonction non linéaire dans l'organe 34 qui délivre pour chaque exemple les potentiels de sortie $y_{j,L}$ de la dernière couche L tels qu'ils sont délivrés par le système. Pour opérer les étapes intermédiaires du calcul de couches en couches, les potentiels de sortie $y_{j,l}$ d'une couche l sont stockés temporairement dans une mémoire d'état 37 et utilisés comme états d'entrée pour la couche suivante. Chaque potentiel $y_{j,L}$ est comparé avec l'état prévu $y_j^p$ dans le comparateur 35 qui, de plus, stocke toutes les erreurs détectées $E_j^p$, et les additionne pour délivrer une erreur $E^p$ relative à chaque exemple.

Les composantes du gradient $g_{j,L}$ sont déterminées par le calculateur hôte 36. Pour cela il reçoit l'erreur $E^p$, les potentiels de sortie $y_{j,L}$ et les états prévus $y_j^p$. Le calculateur hôte 36 détermine les composantes $g_{j,L}$ tel que :

$$g_{j,L} = \theta_{j,L} \cdot (y_{j,L} - y_j^p) \cdot F'_{j,L}$$

avec $1 \leq j \leq I(L)$

$F'_{i,L}$ sont les dérivées de chaque fonction non linéaire de la couche de sortie.

Ces composantes $g_{j,L}$ sont introduites dans les moyens de calcul 31 qui permettent la mise en oeuvre de la méthode de la rétropropagation du gradient, c'est-à-dire que ces composantes $g_{j,L}$ sont introduites sur les couches de sortie et leur action est rétropropagée sur les couches d'entrée.

Les composantes du gradient $g_{j,l} = \partial E^p / \partial x_{j,l}$ (avec $l \neq L$) sont ainsi déterminées par les moyens de calcul 31 par rétropropagation du gradient de l'erreur $E^p$. Les composantes $g_{j,l}$ sont délivrées au calculateur hôte 36 qui détermine les variations $\Delta x_{j,l}$ subséquentes pour chaque état de neurones. Pour cela il multiplie chaque composante $g_{j,l}$ par son paramètre $\theta_{j,l}$ selon l'invention.

Toutes les variations $\Delta x_{j,l}$ sont transmises à l'organe de mise à jour 38 qui détermine les nouveaux coefficients synaptiques $W_{ij,l}$ et les délivre à la mémoire 30.

Ce processus est réitéré pour effectuer la totalité de la phase d'apprentissage. Au cours de celle-ci le calculateur hôte 36 va pouvoir appliquer un paramètre de correction $\theta_l^+$ voisin ou égal à zéro pour les premières itérations puis le faire croître pour approcher la valeur 1 au cours des itérations ultérieures. De même le calculateur hôte 36 va opérer la multiplication de $E_j^p$ par les paramètres $\eta_{j,L}$ avant de calculer les composantes $g_{j,L}$ pour effectuer le rétropropagation du gradient dans les moyens de calcul 31.

Lorsque les constantes $\beta_l$ propres à chaque couche sont appliquées aux corrections $\theta_{j,l} \cdot g_{j,l}$ pour déterminer des variations $-\Delta x_{j,l}$ proportionnelles à $\beta_l \cdot \theta_{j,l} \cdot g_{j,l}$, ceci est effectué par le calculateur hôte 36 préalablement à la remise à jour des coefficients synaptiques $W_{ij,l}$ par l'organe de mise à jour 38.

Ainsi la structure de réseau de neurones en couches selon l'invention comprend des moyens pour mettre en oeuvre la méthode d'apprentissage décrite et pour cela est munie :

- de moyens pour stocker les coefficients synaptiques,
- de moyens pour stocker des exemples à apprendre puis les introduire dans le réseau de neurones,
- de moyens pour comparer pour chaque exemple les potentiels de neurones obtenus en sortie avec les résultats prévus pour chaque exemple et pour délivrer une erreur selon les écarts observés,
- de moyens pour calculer des états de neurones de sortie à partir des potentiels des neurones d'entrée et pour effectuer la rétropropagation du gradient de ladite erreur et délivrer les composantes $g_{j,l}$ dudit gradient,
- de moyens pour appliquer en sortie des fonctions non linéaires,
- de moyens pour calculer des nouveaux coefficients synaptiques en tenant compte des composantes $g_{j,l}$ du gradient et de paramètres multiplicateurs propres à la méthode qui permettent de contrôler l'importance attribuée à certaines itérations du cycle des itérations ou l'importance attribuée à certaines couches ou à certains neurones du réseau de neurones.

Le schéma de la figure 3 est présenté sous la forme d'une structure de réseaux de neurones formée de blocs fonctionnels gérés par un calculateur hôte. Il est possible que l'ensemble des fonctions à réaliser soit intégré au calculateur lui-même. Dans ce cas l'invention concerne également un calculateur qui est programmé pour mettre en oeuvre les étapes de la méthode décrite.

Le tableau 1 représente l'organigramme des principales étapes d'un exemple de programme selon l'invention.

- L'étape 1 initialise $\eta^+$ et $\theta^+$ à de faibles valeurs positives et fixe les températures $T_l$. Pour la couche l=1 la valeur $T_1$ est voisine de la moyenne des valeurs absolues des entrées relatives à l'exemple p et pour l≠1, la valeur $T_l$ est de l'ordre de 1 (boucle sur 1).

Les coefficients synaptiques $W_{ij,l}$ sont initialisés par un choix aléatoire ou à des valeurs connues (boucle sur i et j).

- L'étape 2 introduit dans le réseau de neurones les valeurs des entrées $y_{i,o}$ pour un exemple p.
- L'étape 3 calcule des états $x_{j,l}$ et des potentiels de sortie $y_{j,l}$. Le calcul des états $x_{j,l}$ peut faire intervenir un seuil $s_{j,l}$ qui peut également être introduit dans la fonction non linéaire F.
- L'étape 4 applique la stratégie du signe sur l'erreur de sortie. Pour cela on effectue le produit $y_j^p \cdot y_{j,L}$ et on considère son signe. Si le produit est négatif ou nul : $\eta_{j,L}$ prend la valeur 1. Dans le cas inverse $\eta_{j,L}$ prend la valeur $\eta^+$.

L'erreur $E^p$ sur la couche de sortie est déterminée et les composantes du gradient $g_{j,L}$ sont calculées.

- L'étape 5 Les dérivées $F'_{j,l}$ des fonctions non linéaires sont calculées. Les composantes du gradient $g_{j,l-1}$ sont ensuite calculées par rétropropagation du gradient. On teste le produit $-g_{j,l} \cdot x_{j,l}$. Lorsque ce produit est négatif ou nul, $\theta_{j,L}$ est mis égal à 1. Lorsque ce produit est positif, $\theta_{j,L}$ est égal à $\theta^+$ avec $0 \leq \theta^+ \leq 1$. On calcule ensuite $\beta_{j,l}$.
- L'étape 6 Les composantes du gradient $g_{j,l}$ sont utilisées pour déterminer les variations $\Delta x_{j,l}$ subséquentes. Cette étape donne un choix d'un exemple de fonction auto-adaptative qui permet de répercuter les composantes $g_{j,l}$ sur les variations $\Delta x_{j,l}$. Cette fonction fait intervenir le module $G^2$ du gradient $g_{j,l}$, des facteurs $\nu$, $\zeta$ qui règlent l'amplitude de la correction et la valeur moyenne $\bar{\beta}$ des termes $\beta_{j,l}$ associés aux différents neurones.
- L'étape 7 Elle permet de répartir les variations $\Delta x_{j,l}$ calculées pour l'exemple p, à la fois sur les coefficients synaptiques $W_{ij,l}$ et sur les seuils $s_{j,l}$. Le taux de répartition est contrôlé par un paramètre $\sigma_l$ qui fait intervenir la norme

$$\sum_i y_{i,1-1}^2 \; .$$

Cette étape 7 représente un exemple de taux de répartition qui permet de garder quasiment constante la norme des coefficients synaptiques pour un neurone de sortie donné. On impose que les changements soient effectués avec des modifications des poids et des seuils aussi faibles que possibles.

- L'étape 8 Lorsque l'erreur cumulée

$$\sum_{p=1}^{p=P} E^p$$

pour tous les exemples est inférieure ou égale à une valeur prédéterminée ε, l'apprentissage est achevé. Lorsque cette erreur est supérieure à ε, on continue selon les étapes suivantes.

- L'étape 9 Les températures $T_l$ sont légèrement abaissées et pour cela la valeur initiale est multipliée par un paramètre $\rho_l$ compris entre 0 et 1.
- L'étape 10 Les valeurs de $\eta^+$ et $\theta^+$ sont réajustées.
- L'étape 11 Un autre exemple p' est sélectionné et le traitement recommence à l'étape 2.

## TABLEAU 1

**1.** Init : $0 < \eta^+ \ll 1$ ; $0 < \theta^+ \ll 1$

$$T_1 = \langle |y_{i,o}| \rangle_{i,p}$$

$l = 2, \ldots, L$

$T_l = 1$

$i = 1, \ldots, I(l-1)$ ; $j = 1, \ldots, I(l)$

$W_{ij,l}$

**2.** $Ex(p) \rightarrow y_{i,o}$ ; $i = 1, \ldots, I(0)$ ← $\boxed{11}$

**3.** $l = 1, \ldots, L$ ; $j = 1, \ldots, I(l)$

$$x_{j,l} = \left( \sum_{i=1}^{I(l-1)} W_{ij,l-1} \cdot y_{i,l-1} \right) - s_{j,l}$$

$$y_{j,l} = F(x_{j,l}) = \tanh(x_{j,l}/T_l)$$

**4.** $l = L$ ; $j = 1, \ldots, I(L)$

$Y_j^p \cdot Y_{j,L}$ $\leq 0$

$> 0$

$\eta_{j,L} = \eta^+$ ; $0 < \eta^+ \leq 1$

$\eta_{j,L} = 1$

$$E^p = \tfrac{1}{2} \cdot \sum_{j=1}^{j=L} \eta_{j,L} (y_{j,L} - y_j^p)^2$$

$j = 1, \ldots, I(L)$

$$g_{j,L} \equiv \partial E^p / \partial x_{j,L} = \eta_{j,L} \cdot (y_{j,L} - y_j^p) \cdot \partial F(x_{j,L}) / \partial x_{j,L}$$

$\boxed{5}$

5. $\quad l=L,\ldots,1 \; ; \; j=1,\ldots,I(l-1)$

$$F'_{j,l} \equiv \partial F(x_{j,l})/\partial x_{j,l}$$

$$g_{j,l-1} = \left( \sum_{i=1}^{I(l)} W_{ji,l} \cdot g_{i,l} \right) \cdot F'_{j,l-1}$$

$$-g_{j,l} \cdot x_{j,l} \qquad < 0$$

$> 0$

$$\theta_{j,L} = \theta^+ \; ; \; 0 < \theta^+ < 1 \qquad\qquad \theta_{j,L} = 1$$

$$\beta_{j,l} = \beta_l \cdot \theta_{j,l}$$

6. $\quad 0 < v < 1 \; ; \; v = 1 \; ; \; \zeta = 1$

$$\gamma \approx \frac{1}{T_1^{(2-v)}}$$

$$G^2 \equiv \sum_{l=1}^{l=L} \sum_{j=1}^{I(l)} \beta_{j,l} \cdot g_{j,l}^2$$

$$\bar{\beta} \equiv \left( \sum_{l=1}^{l=L} \sum_{j=1}^{I(l)} \beta_{j,l}^2 \cdot g_{j,l}^2 \right) / \left( \sum_{l=1}^{l=L} \sum_{j=1}^{I(l)} \beta_{j,l} \cdot g_{j,l}^2 \right)$$

$$l=1,\ldots,L \; ; \; j=1,\ldots,I(l)$$

$$\Delta x_{j,l} = - \zeta \cdot E^p \cdot \frac{\beta_{j,l} \cdot g_{j,l}}{G^2 + \gamma (\bar{\beta} G^2)^{v/2}}$$

$$\boxed{7}$$

7. $l=1,\ldots,L$

$$||\overline{Y}_{1-1}||^2 = \sum_{i=1}^{i=I(1-1)} y_{i,1-1}^2$$

$$0 < \sigma_{1-1} = \sqrt{(< y_{i,1-1}^2 >_i)}$$

$j=1,\ldots,I(1)$

$$\Delta s_{j,1} = \frac{\sigma_{1-1}^2 \cdot \Delta x_{j,1}}{||\overline{Y}_{1-1}||^2 - (x_{j,1}+s_{j,1})^2 + \sigma_{1-1}^2}$$

$$s_{j,1} = s_{j,1} + \Delta s_{j,1}$$

$i=1,\ldots,I(1-1)$

$$\Delta W_{ij,1} = \frac{y_{i,1-1} \cdot \Delta x_{j,1}}{||\overline{Y}_{1-1}||^2 - (x_{j,1}+s_{j,1})^2 + \sigma_{1-1}^2}$$

$$- \frac{W_{ij,1} \cdot (x_{j,1}+s_{j,1}) \cdot \Delta x_{j,1}}{||\overline{Y}_{1-1}||^2 - (x_{j,1}+s_{j,1})^2 + \sigma_{1-1}^2}$$

$$W_{ij,1} = W_{ij,1} + \Delta W_{ij,1}$$

8.
$$( \sum_{p=1}^{p=P} E^p ) - \varepsilon \quad \xrightarrow{<0} \text{END}$$

$>0$

9. $l=1,\ldots,L$
$T_1 = \varrho_1 \cdot T_1 \ (0 < \varrho_1 < 1)$

10. $\theta^+ = \eta^+ = T_C/(T_C+T_1)$

11. $p=p'$ → $\boxed{2}$

**Revendications**

1. Méthode d'apprentissage mise en oeuvre dans un réseau de neurones, formé de L couches, qui comprend les étapes de :

- détermination des états $x_{j,l}$ des neurones d'une couche 1 à partir des potentiels de sortie $y_{j,l-1}$ délivrés par les neurones de la couche précédente qui leur sont connectés par des coefficients synaptiques $W_{ij,l}$ ou à partir de données d'entrée $y_{i,o}$ pour la couche 1=1, tel que :

$$x_{j,1} = \sum_i W_{ij,1} \cdot y_{i,1-1}$$

- détermination des potentiels $y_{j,l}$ des neurones de sortie par application d'une fonction non-linéaire F tel que :

$$y_{j,l} = F(x_{j,l})$$

avec :

l : indice de la couche considérée $1 \leq l \leq L$
j : indice du neurone de la couche de sortie l
i : indice du neurone de la couche d'entrée l-1

la méthode comprenant des phases d'apprentissage par itération à l'aide de P exemples qui sont introduits successivement sur les entrées du réseau de neurones avec :
- initialisation de la matrice de coefficients synaptiques $W_{ij,l}$ du réseau de neurones,
- introduction des données d'entrée $y_{j,o}^p$ de chaque exemple p destiné à l'apprentissage,
- comparaison des résultats obtenus $\tilde{y}_{j,L}$ sur la couche de sortie L avec la sortie $y_j^p$ prévue pour cet exemple p présenté en entrée, pour définir une erreur partielle $E_j^p$ ,
- détermination de la somme $E^p$ de toutes les erreurs partielles $E_j^p$ observées pour chaque neurone de sortie et pour chaque exemple p,
- détermination des différentes composantes du gradient $g_{j,L} = \partial E^p / \partial x_{j,L}$ de l'erreur $E^p$ par rapport aux états $x_{j,L}$ pour la couche de sortie L,
- mise en oeuvre de la méthode de rétropropagation des composantes $g_{j,L}$ du gradient pour que le réseau de neurones détermine les composantes $g_{j,l}$ du gradient pour les autres couches à partir de la matrice de coefficients synaptiques transposée,
- détermination des variations $\Delta x_{j,l}$ subséquentes qui ont un signe opposé à la composante correspondante $g_{j,l}$, afin d'adapter le réseau de neurones
- mise à jour des coefficients synaptiques à partir de ces variations $\Delta x_{j,l}$

caractérisée en ce que pour déterminer les variations $\Delta x_{j,l}$ subséquentes des états de neurones, la méthode comprend une étape de multiplication des composantes $g_{j,l}$ du gradient par des paramètres $\theta_{j,l}$ pour calculer des variations $\Delta x_{j,l}$ proportionnelles à $-\theta_{j,l} \cdot g_{j,l}$, où $\theta_{j,l}$ dépend de l'état du neurone j de la couche 1, avec $\theta_{j,l}=1$ lorsque $-g_{j,l}$ et $x_{j,l}$ sont de signes différents, et $\theta_{j,l}=\theta_l^+$ lorsque $-g_{j,l}$ et $x_{j,l}$ sont de même signe, avec $0 \leq \theta_l^+ \leq 1$.

2. Méthode selon la revendication 1 caractérisée en ce que, au cours des premières itérations de l'apprentissage, pour chaque exemple donné, $\theta_l^+$ est choisi soit voisin de zéro soit égal à zéro.

3. Méthode selon la revendication 2 caractérisée en ce que, au cours des itérations ultérieures de l'apprentissage, pour chaque exemple donné, $\theta_l^+$ croît vers la valeur 1.

4. Méthode selon une des revendications 1 à 3 caractérisée en ce que les fonctions non linéaires sont choisies faiblement non linéaires en début d'apprentissage puis s'approchent de fonctions de type signe en fin d'apprentissage, et pour permettre ce choix, les coefficients synaptiques qui convergent vers un neurone donné j gardent une norme

$$\sum_i (W_{ij,1})^2$$

quasiment constante.

5. Méthode selon la revendication 4 caractérisée en ce que les fonctions non linéaires F sont du type $y_{j,l} = \tanh(x_{j,l}/T_l)$ où $T_l$ est un paramètre relatif à la couche l appelé température de la couche l.

6. Méthode selon la revendication 5 caractérisée en ce que les variations apportées au cours de l'apprentissage au degré de non linéarité des fonctions non linéaires sont obtenues en faisant varier, pour chaque couche, les paramètres $T_l$.

7. Méthode selon une des revendications 1 à 6 caractérisée en ce que, pour déterminer des composantes du gradient $g_{j,L}$, la méthode comprend une étape de détermination de l'erreur $E^p$ en appliquant préalablement un facteur de correction $\eta_{j,L}$ qui dépend du neurone j de la dernière couche L tel que

$$E^p \simeq \sum_{j=1}^{I(L)} \eta_{j,L} \cdot E^p_j,$$

afin de favoriser le début de l'apprentissage, avec $\eta_{j,L}=1$ si $y^p_j$ et $y_{j,L}$ sont de signes différents et $\eta_{j,L}=\eta^+$ si $y^p_j$ et $y_{j,L}$ sont de même signe avec $0 \leq \eta^+ \leq 1$.

8. Méthode selon la revendication 7 caractérisée en ce que $\eta_{j,L}=\theta_{j,L}$.

9. Méthode selon une des revendications 1 à 8 caractérisée en ce que l'erreur partielle $E^p_j$ est l'erreur quadratique $\frac{1}{2} (y^p_j - y_{j,L})^2$.

10. Méthode selon une des revendications 1 à 9 caractérisée en ce qu'elle comprend une étape de multiplication des composantes $\theta_{j,l} \cdot g_{j,l}$, par des constantes $\beta_l$ qui dépendent de chaque couche, pour que $-\Delta x_{j,l}$ soit alors proportionnel à $\beta_l \cdot \theta_{j,l} \cdot g_{j,l}$, avec $\beta_l$ strictement décroissante selon le numéro de la couche, en allant des couches d'entrée vers les couches de sortie, afin que les corrections appliquées aux états de neurones permettent d'accélérer l'apprentissage sur les couches d'entrée et de ralentir l'apprentissage sur les couches de sortie.

11. Réseau de neurones pour mettre en oeuvre la méthode d'apprentissage selon une des revendications 1 à 10 et pour cela est munie :

   - de moyens pour stocker les coefficients synaptiques,
   - de moyens pour stocker des exemples à apprendre puis les introduire dans le réseau de neurones,
   - de moyens pour comparer pour chaque exemple les potentiels de neurones obtenus en sortie avec les résultats prévus pour chaque exemple et pour délivrer une erreur selon les écarts observés,
   - de moyens pour calculer des états de neurones de sortie à partir des potentiels des neurones d'entrée et pour effectuer la rétropropagation du gradient de ladite erreur et délivrer les composantes $g_{j,l}$ dudit gradient,
   - de moyens pour appliquer en sortie des fonctions non linéaires, caractérisé en ce qu'il comprend :
   - de moyens pour calculer des nouveaux coefficients synaptiques en tenant compte des composantes $g_{j,l}$ du gradient et de paramètres multiplicateurs propres à la méthode qui permettent de contrôler l'importance attribuée à certaines itérations du cycle des itérations ou l'importance attribuée à certaines couches ou à certains neurones du réseau de neurones.

12. Calculateur programmé pour simuler un réseau de neurones pour mettre en oeuvre la méthode d'apprentissage selon une des revendications 1 à 10 et pour cela est muni :

   - de moyens pour stocker les coefficients synaptiques,
   - de moyens pour stocker des exemples à apprendre puis les introduire dans le réseau de neurones,
   - de moyens pour comparer pour chaque exemple les potentiels de neurones obtenus en sortie avec les résultats prévus pour chaque exemple et pour délivrer une erreur selon les écarts observés,
   - de moyens pour calculer des états de neurones de sortie à partir des potentiels des neurones d'entrée et pour effectuer la rétropropagation du gradient de ladite erreur et délivrer les composantes $g_{j,l}$ dudit gradient,
   - de moyens pour appliquer en sortie des fonctions non linéaires, caractérisé en ce qu'il comprend :
   - de moyens pour calculer des nouveaux coefficients synaptiques en tenant compte des composantes $g_{j,l}$ du gradient et de paramètres multiplicateurs propres à la méthode qui permettent de contrôler l'importance attribuée à certaines itérations du cycle des itérations ou l'importance attribuée à certaines couches ou à certains neurones du réseau de neurones.

**Patentansprüche**

1. Ein in einem neuronalen Netzwerk umgesetztes Lernverfahren, das in einem aus L Schichten gebildeten neuronalen Netzwerk folgende Schritte enthält :

    . Bestimmung der Zustände $x_{j,l}$ der Neuronen einer Schicht l anhand der Ausgangspotentiale $y_{i,l-1}$, von Neuronen der vorherigen Schicht abgegeben und mit ihnen über synaptische Koeffizienten $W_{ij,l}$ verbunden, oder anhand von Dateneingängen $y_{i,o}$ für die Schicht l=1, wie :

$$x_{j,l} = \sum_{I} W_{ij,l} \cdot Y_{i,l-1}$$

    . Bestimmung der Potentiale $y_{j,l}$ der Ausgangsneuronen durch Anwendung einer nichtlinearen Funktion F wie :

$$y_{j,l} = F(x_{j,l})$$

    wobei :

        l: Index der betreffenden Schicht $1 \leq l \leq L$,
        j: Index des Neurons der Ausgangsschicht l,
        i: Index des Neurons der Eingangsschicht l-1,

    die Methode enthält Iterations-Lernphasen unter Zuhilfenahme von P Beispielen, die nacheinander in die Eingänge des neuronalen Netzwerks eingegeben werden, mit :
    . Initialisierung der synaptischen Koeffizientenmatrix $W_{ij,l}$ des neuronalen Netzwerks,
    . Einleitung der Eingangsdaten $y^p_{j,o}$ jedes für die Erlernung bestimmten Beispiels p,
    . Vergleich der erhaltenen Ergebnisse $y_{j,L}$ auf der Ausgangsschicht L mit dem für dieses Beispiel p vorgesehenen, am Eingang aufgetretenen Ausgang $y^p_j$, um einen Teilfehler $E^p_j$ zu definieren,
    . Bestimmung der Summe $E^p$ aller Teilfehler $E^p_j$, die für jedes Ausgangsneuron und für jedes Beispiel p beobachtet wurden,
    . Bestimmung der verschiedenen Bestandteile des Gradienten $g_{j,L} = \partial E^p / \partial x_{j,L}$ des Fehlers $E^p$ in bezug auf die Zustände $x_{j,L}$ für die Ausgangsschicht L,
    . Umsetzung der Rückübertragungsmethode der Bestandteile $g_{j,L}$ des Gradienten, damit das neuronale Netzwerk die Bestandteile $g_{j,l}$ des Gradienten für die anderen Schichten anhand der Matrix der transponierten synaptischen Koeffizienten bestimmt,
    . Bestimmung der darauffolgenden Variationen $\Delta x_{j,l}$, die ein umgekehrtes Zeichen der entsprechenden Komponente $g_{j,l}$ sind, um das neuronalen Netzwerk anzupassen,
    . Aktualisierung der synaptischen Koeffizienten anhand dieser Variationen $\Delta x_{j,l}$, mit dem Merkmal, daß für die Bestimmung der darauffolgenden Variationen $\Delta x_{j,l}$ der Neuronenzustände die Methode einen Multiplikationsschritt der Bestandteile $g_{j,l}$ des Gradienten mit den Parametern $\theta_{j,l}$ enthält, um die Variationen $\Delta x_{j,l}$ zu berechnen, proportional zu $-\theta_{j,l} \cdot g_{j,l}$, wobei $\theta_{j,l}$ vom Zustand des Neurons j der Schicht 1 abhängt, mit $\theta_{j,l}=1$, wenn $-g_{j,l}$ und $x_{j,l}$ verschiedenen Zeichens sind und $\theta_{j,l}=\theta_l^+$, wenn $-g_{j,l}$ und $x_{j,l}$ gleichen Zeichens sind, mit $0 \leq \theta_l^+ \leq 1$.

2. Methode laut Anspruch 1, mit dem Merkmal, daß im Laufe der ersten Iterationen der Erlernung für jedes gegebene Beispiel $\theta_l^+$ entweder nahe bei oder gleich Null gewählt wird.

3. Methode laut Anspruch 2, mit dem Merkmal, daß im Laufe der späteren Iterationen der Erlernung für jedes gegebene Beispiel $\theta_l^+$ auf den Wert 1 ansteigt.

4. Methode laut einem der Ansprüche 1 bis 3, mit dem Merkmal, daß die nichtlinearen Funktionen am Anfang der Erlernung schwach nichtlinear gewählt werden, und sich dann den Funktionen vom Typ Zeichen am Ende der Erlernung nähern, und um diese Wahl zu ermöglichen behalten die synaptischen Koeffizienten, die zu einem gegebenen Neuron j konvergieren, eine quasi konstante Norm

$$\sum_i \left(W_{ij,l}\right)^2$$

bei.

**5.** Methode laut Anspruch 4, mit dem Merkmal, daß diese nichtlinearen Funktionen F vom Typ $y_{j,l}=\tanh(x_{j,l}/T_l)$ sind, wobei $T_l$ ein Parameter relativ zur Schicht l mit der Bezeichnung Temperatur der Schicht l ist.

**6.** Methode laut Anspruch 5, mit dem Merkmal, daß die im Laufe der Erlernung auf dem Niveau der Nichtlinearität der nichtlinearen Funktionen eingebrachten Variationen erhalten werden, indem für jede Schicht die Parameter $T_l$ variiert werden.

**7.** Methode laut einem der Ansprüche 1 bis 6, mit dem Merkmal, daß sie zur Bestimmung der Bestandteile des Gradienten $g_{j,L}$ einen Fehlerbestimmungsschritt $E^p$ enthält, unter zuvoriger Anwendung eines Korrekturfaktors $\eta_{j,L}$, der vom Neuron j der letzten Schicht L wie

$$E^p = \sum_{j=1}^{I(L)} \eta_{j,L} \cdot E^p_j$$

abhängt, um den Beginn der Erlernung zu begünstigen, mit $\eta_{j,L}=1$, wenn $y^p_j$ und $y_{j,L}$ verschiedenen Zeichens sind, und $\eta_{j,L}=\eta^+$ wenn $y^p_j$ und $y_{j,L}$ gleichen Zeichens sind, mit $0\leq\eta^+\leq1$.

**8.** Methode laut Anspruch 7, mit dem Merkmal, daß $\eta_{j,L} = \theta_{j,L}$.

**9.** Methode laut einem der Ansprüche 1 bis 8, mit dem Merkmal, daß der partielle Fehler $E^p_j$ der quadratische Fehler $\frac{1}{2}(y^p_j - y_{j,L})^2$ ist.

**10.** Methode laut einem der Ansprüche 1 bis 9, mit dem Merkmal, daß die Erfindung einen Multiplikationsschritt der Bestandteile $\theta_{j,l}\cdot g_{j,l}$ mit den Konstanten $\beta_l$ enthält, die von jeder Schicht abhängen, damit $-\Delta x_{j,l}$ dann proportional ist zu $\beta_l\cdot\theta_{j,l}\cdot g_{j,l}$, mit $\beta_l$ strikt abnehmend gemäß der Nummer der Schicht, wenn man von den Eingangs- zu den Ausgangsschichten geht, damit die an den Neuronenzuständen vorgenommenen Korrekturen eine Beschleunigung der Erlernung der Eingangsschichten und eine Verlangsamung der Erlernung der Ausgangsschichten ermöglichen.

**11.** Ein neuronales Netzwerks für die Durchführung der Lernmethode laut einem der Ansprüche 1 bis 10, das versehen ist mit :

- Mitteln zur Speicherung der synaptischen Koeffizienten,
- Mitteln zur Speicherung der zu lehrenden Beispiele und ihre darauffolgende Einführung in des neuronale Netzwerk,
- Mittel für den Vergleich am Ausgang der für jedes Beispiel vorgesehenen Ergebnisse und für die Abgabe eines Fehlers gemäß den beobachteten Abweichungen,
- Mitteln für die Berechnung der Zustände der Ausgangsneuronen anhand der Potentiale der Eingangsneuronen und für die Vornahme der Rückübertragung des Gradienten des besagten Fehlers und der Abgabe der Bestandteile $g_{j,l}$ des besagten Gradienten,
- Mitteln für die Anwendung nichtlinearer Funktionen am Ausgang, mit dem Merkmal, daß es folgendes enthält :
- Mittel für die Berechnung der neuen synaptischen Koeffizienten unter Berücksichtigung der Bestandteile $g_{j,l}$ des Gradienten und der der Methode eigenen Multiplikationsparameter, die es ermöglichen, die Bedeutung gewisser Wiederholungen der Wiederholungszyklen oder die gewissen Schichten oder gewissen Neuronen des neuronalen Netzwerks zugeteilte Bedeutung zu kontrollieren.

**12.** Programmierter Rechnier für die Simulation eines neuronales Netzwerks für die Durchführung der Lernmethode laut einem der Ansprüche 1 bis 10, das versehen ist mit :

- Mitteln zur Speicherung der synaptischen Koeffizienten,
- Mitteln zur Speicherung der zu lehrenden Beispiele und ihre darauffolgende Einführung in des neuronale Netzwerk,

- Mittel für den Vergleich am Ausgang der für jedes Beispiel vorgesehenen Ergebnisse und für die Abgabe eines Fehlers gemäß den beobachteten Abweichungen,
- Mitteln für die Berechnung der Zustände der Ausgangsneuronen anhand der Potentiale der Eingangsneuronen und für die Vornahme der Rückübertragung des Gradienten des besagten Fehlers und der Abgabe der Bestandteile $g_{j,l}$ des besagten Gradienten,
- Mitteln für die Anwendung nichtlinearer Funktionen am Ausgang, mit dem Merkmal, daß es folgendes enthält :
- Mittel für die Berechnung der neuen synaptischen Koeffizienten unter Berücksichtigung der Bestandteile $g_{j,l}$ des Gradienten und der der Methode eigenen Multiplikationsparameter, die es ermöglichen, die Bedeutung gewisser Wiederholungen der Wiederholungszyklen oder die gewissen Schichten oder gewissen Neuronen des neuronalen Netzwerks zugeteilte Bedeutung zu kontrollieren.

## Claims

1. A method of learning which is carried out in a neural network consisting of L layers, which method comprises the steps of:

   . determining the states $x_{j,l}$ of the neurons of a layer l on the basis of output potentials $y_{i,l-1}$ supplied by the neurons of the preceding layer which are connected thereto by way of synaptic coefficients $W_{ij,l}$, or on the basis of input data $y_{i,o}$ for the layer l=1, so that

$$x_{j,l} = \sum_l W_{ij,l} \cdot y_{i,l-1}$$

   . determining of the potentials $y_{j,l}$ of the output neurons by application of a non-linear function F so that:

$$y_{j,l} = F(x_{j,l}),$$

   where

   l: index of the layer considered, $1 \leq l \leq L$
   j : index of the neuron of the output layer l
   i : index of the neuron of the input layer l-1

   the method comprising learning phases by iteration by means of P examples which are successively introduced via the inputs of the neural network, including:
   . initialization of the synaptic coefficient matrix $W_{ij,l}$ of the neural network,
   . introduction of the input data $y^p_{j,o}$ of each example p intended for learning,
   . comparison of the results $y^p_j$ obtained on the output layer L with the output $y^p_j$ envisaged for this example p presented to the input, in order to define a partial error $E^p_j$,
   . determination of the sum $E^p$ of all partial errors $E^p_j$ observed for each output neuron and for each example p,
   . determination of the various components of the gradient $g_{j,L} = \partial E p / \partial x_{j,L}$ of the error $E^p$ with respect to the states $x_{j,L}$ for the output layer L,
   . carrying out the method of back propagation of the components $g_{j,L}$ of the gradient in order to ensure that the neural network determines the components $g_{j,l}$ of the gradient for the other layers on the basis of the transposed synaptic coefficient matrix,
   . determination of the subsegment variations $\Delta x_{j,l}$ having a sign which opposes that of the corresponding component $g_{j,l}$, in order to adapt the neural network,
   . updating the synaptic coefficients on the basis of these variations $\Delta x_{j,l}$ characterized in that for determining the subsegment variations $\Delta x_{j,l}$ of the neuron states, the method includes a step for multiplying the components $g_{j,l}$ of the gradient by parameters $\theta_{j,l}$ in order to calculate variations $\Delta x_{j,l}$ which are proportional to $-\theta_{j,l} \cdot g_{j,l}$, where $\theta_{j,l}$ depends on the state of the neuron j of the layer l, where $_{j,l} = 1$ when $-g_{j,l}$ and $x_{j,l}$ have a different sign, and $\theta_{j,l} = \theta^+_l$ when $-g_{j,l}$ and $x_{j,l}$ have the same sign, where $0 \leq \theta_l^+ \leq 1$.

2. A method as claimed in Claim 1, characterized in that during the first learning iterations $\theta_l^+$ is chosen to be either approximately zero or equal to zero for each given example.

3. A method as claimed in Claim 2, characterized in that in the course of the later learning iteration $\theta_l^+$ increases towards the value 1 for each given example.

4. A method as claimed in any one of the Claims 1 to 3, characterized in that the non-linear functions are chosen to be slightly non-linear at the start of learning and approach sign-type functions at the end of learning and in order to enable allow for this choice the synaptic coefficients which converge towards a given neuron j keep a standard

$$\sum_l (W_{ij,l})^2$$

quasi-constant.

5. A method as claimed in Claim 4, characterized in that the non-linear functions F are of the type $y_{j,l}=\tanh(x_{j,l}/T_l)$ where $T_l$ is a parameter relating to the layer 1 which is referred to as the temperature of the layer l.

6. A method as claimed in Claim 5, characterized in that the variations applied during learning in respect of the degree of non-linearity of the non-linear functions are obtained by variation of the parameters $T_l$ for each layer.

7. A method as claimed in any one of the Claims 1 to 6, characterized in that in order to determine the components of the gradient $g_{j,L}$, the method includes a step for determining the error $E^p$ by applying in advance a correction factor $\eta_{j,L}$ which depends on the neuron j of the last layer L so that

$$E^p = \sum_{j=1}^{I(L)} \eta_{j,l} \cdot E_j^p$$

in order to favor the start of learning,

where $\eta_{j,L} = 1$ if $y_j^p$ and $y_{j,L}$ are of different sign,

and $\eta_{j,L} = \eta^+$ if $y_j^p$ and $y_{j,L}$ are of the same sign,

where $0 \leq \eta^+ \leq 1$.

8. A method as claimed in Claim 7, characterized in that

$$n_{j,L} = \theta_{j,L}.$$

9. A method as claimed in any one of the Claims 1 to 8, characterized in that the partial error $E_j^p$ is the squared error $1/2(y_j^p - y_{j,L})^2$.

10. A method as claimed in any one of the Claims 1 to 9, characterized in that it includes a step for multiplying the components $\theta_{j,l} \cdot g_{j,l}$ by constants $\beta_l$ which depend on each layer, in order to ensure that $-\Delta x_{j,l}$ is either proportional to $\theta_{l,j,l} \cdot g_{j,l}$, with $\beta_l$ decreasing strictly in accordance with the number of the layer, proceeding from the input layers to the output layers, in order to ensure that the corrections applied to the neuron states enable acceleration of learning on the input layers and slowing down of learning on the output layers.

11. A neural network for carrying out the learning method claimed in any one of the Claims 1 to 10, for which purpose it includes:

- means for storing the synaptic coefficients,
- means for storing examples to be learned and for introducing these examples into the neural network,
- means for comparing, for each example, the potentials of the neurons obtained on the output with the results envisaged for each example, and for supplying an error in conformity with the deviations observed,
- means for calculating neuron output states on the basis of input neuron potentials and for performing the gradient back propagation of said error and supplying the components $g_{j,l}$ of said gradient,
- means for applying non-linear functions on the output, characterized in that it includes:
- means for calculating new synaptic coefficients, taking into account the components $g_{j,l}$ of the gradient and multiplication parameters associated with the method and enabling control of the significance attributed to given iterations of the iteration cycle or the significance attributed to given layers or to given neurons of the neural network.

12. A computer programmed to simulate a neural network for carrying out the learning method claimed in any one of the Claims 1 to 10, for which purpose it includes:

- means for storing the synaptic coefficients,
- means for storing examples to be learned and for introducing these examples into the neural network,
- means for comparing, for each example, the potentials of the neurons obtained on the output with the results envisaged for each example, and for supplying an error in conformity with the deviations observed,
- means for calculating neuron output states on the basis of input neuron potentials and for performing the gradient back propagation of said error and supplying the components $g_{j,l}$ of said gradient,
- means for applying non-linear functions on the output, characterized in that it includes:
- means for calculating new synaptic coefficients, taking into account the components $g_{j,l}$ of the gradient and multiplication parameters associated with the method and enabling control of the significance attributed to given iterations of the iteration cycle or the significance attributed to given layers or to given neurons of the neural network.

FIG. 1

FIG. 2

EP 0 401 927 B1

FIG. 3